**Europäisches Patentamt**

**European Patent Office**

**Office européen des brevets**

(19)

(11) Numéro de publication: **0 230 831 B1**

# FASCICULE DE BREVET EUROPEEN

(45) Date de publication du fascicule du brevet:
**11.10.89**

(51) Int. Cl.⁴: **B64G 1/58,** F16L 59/02, G11B 5/72

(21) Numéro de dépôt: **86402890.7**

(22) Date de dépôt: **22.12.86**

(54) **Matériau directement applicable pour servir d'écran de protection ou de dissipation thermique.**

(30) Priorité: **24.12.85 FR 8519145**

(43) Date de publication de la demande:
**05.08.87 Bulletin 87/32**

(45) Mention de la délivrance du brevet:
**11.10.89 Bulletin 89/41**

(84) Etats contractants désignés:
**BE DE ES GB IT NL SE**

(56) Documents cités:
**EP-A- 0 073 688**
**FR-A- 2 061 509**
**GB-A- 1 498 177**
**US-A- 3 397 168**

(73) Titulaire: **AEROSPATIALE Société Nationale Industrielle, 37, Boulevard de Montmorency, F-75781 Paris Cédex 16(FR)**

(72) Inventeur: **Le Touche, Roger André Louis, 5 rue du Beauregard, F-78920 Ecquevilly(FR)**

(74) Mandataire: **Rinuy, Santarelli, 14, avenue de la Grande Armée, F-75017 Paris(FR)**

ACTORUM AG

## Description

La présente invention concerne un matériau directement applicable pour servir d'écran de protection ou de dissipation thermique.

Ce matériau est particulièrement intéressant en raison du phénomène d'hydratation et de surchauffe qui se crée en son sein au cours d'une agression thermique, contrairement à certains dispositifs connus qui ne font intervenir que le phénomène d'hydratation-vaporisation, comme décrit par exemple dans le brevet GB-A 1 498 177.

La Demanderesse connaît et a mis au point un certain nombre de dispositifs et moyens pour réaliser des écrans de protection ou de dissipation thermique fondés sur ce phénomène d'hydratation-surchauffe destinés à la protection d'organes qui doivent résister pendant un temps relativement long à des agressions thermiques d'intensité quelconque atteignant un degré extrêmement élevé (cas d'un incendie ou d'un phénomène thermique très important correspondant à des températures pouvant dépasser 2000°C).

C'est ainsi que l'on a déjà proposé un écran de dissipation thermique comprenant entre deux parois dénommées respectivement paroi chaude et paroi froide, un élément hydrateur stratifié au contact de la paroi froide, un élément surchauffeur stratifié entre l'élément hydrateur et la paroi chaude, un élément réfractaire poreux stratifié entre l'élément surchauffeur et la paroi chaude, cette dernière étant percée d'orifices pour permettre à la vapeur saturée développée dans l'hydrateur pendant la mise en service de l'écran et surchauffée pendant son passage à travers le surchauffeur de s'échapper vers l'extérieur de la paroi chaude (demande de brevet français No. 69.05203 FR-A 2 061 509).

Avec un tel écran, il est possible de réaliser une protection thermique efficace pour une température ne dépassant pas la température de vaporisation du liquide inclus dans l'hydrateur pendant toute la durée de vaporisation sans augmentation de pression (par exemple 100°C pour de l'eau à la pression atmosphérique normale de 1 bar) pendant toute une durée directement proportionnelle à la quantité de ce liquide inclus dans cet hydrateur.

Un tel type d'écran ne peut, comme on peut s'en douter, être utilisé que dans des circonstances et des volumes particuliers.

On connaît de même un écran consistant principalement en un matériau souple du type nappe, mat, réseau de fibres servant de support ou d'armature à un matériau pulvérulent susceptible d'absorber et de retenir un liquide pour donner une pâte ou un gel à haut rendement thixotrope, cet élément, hydrateur surchauffeur, évoluant, en présence dudit liquide, de la fonction hydrateur vers la fonction surchauffeur selon le déroulement de l'agression thermique. Un tel écran implique, dans sa réalisation, de disposer l'élément hydrateur surchauffeur entre deux éléments souples de revêtement, l'un destiné à venir au contact intime de la face de l'organe à protéger, l'autre constituant la face externe de l'écran thermique (demande de brevet français No

81.16303, FR-A 2 512 169), ces deux éléments de revêtement jouant également le rôle de peaux d'étanchéité, garantissant ainsi une tenue au vieillissement dans une ambiance normale.

Un tel écran doit donc dans sa réalisation tenir compte de ce phénomène de vieillissement et par conséquent le matériau d'étanchéité présente de l'importance quant à l'efficacité du produit final.

Enfin, on a déjà proposé un écran de protection ou de dissipation thermique offrant une gamme plus étendue des températures de protection ou de stabilisation de la paroi à protéger, tout en prolongeant de façon notable la durée de protection, la stabilisation de température se faisant à des niveaux différents et dégressifs en partant de la face chaude (zone affectée par l'agression thermique) vers la face froide délimitant la zone à protéger.

Un tel écran consiste en un ensemble composite comprenant également une paroi chaude et une paroi froide et comportant entre ces deux parois au moins deux éléments adjacents vaporiseurs-surchauffeurs en matériau souple, rigide ou rigidifié renfermant chacun en son sein une substance capable de dégager à une température donnée propre à chaque élément un gaz ou une vapeur ininflammable, chaque élément étant séparé de l'autre par une paroi souple ou rigide étanche à la température de dégagement des vapeurs d'eau ou de gaz de l'élément situé le plus près de ladite paroi chaude mais susceptible de devenir poreux dès que cette température est dépassée, chaque élément, par suite de la présence de ladite substance, évoluant de la fonction "vaporiseur" vers la fonction "surchauffeur" selon le déroulement de l'agression thermique à laquelle il est soumis (demande de brevet français No 83.10560, FR-A 2 547 895).

Dans ce dernier type d'écran, il est aussi nécessaire que dans le précédent de faire appel à des peaux d'étanchéité. Or une telle contrainte peut être préjudiciable pour de nombreuses applications.

La présente invention se propose par conséquent de fournir un matériau directement applicable, pour servir d'écran de protection ou de dissipation thermique, sans autre adaptation qu'une mise en forme et sans autres conditions d'emballage ou de stockage visant l'étanchéité.

Le matériau selon l'invention est caractérisé en ce qu'il est constitué d'une silice (dioxyde de silicium) de faible densité avec, en surface, des groupes silanols (SiOH) chimiquement stables, et présentant une surface spécifique d'au moins 300 $m^2/g$, possédant en outre la propriété de pouvoir fixer chimiquement des molécules d'eau libre et de permettre la surchauffe des vapeurs de cette eau libre sous l'effet d'une agression thermique jouant ainsi le rôle d'hydrateur-surchauffeur, ladite matière étant mélangée intimement avec au moins un liant non carbonisable et au moins une source desdites molécules d'eau ou une substance fournissant ces dernières.

Le matériau selon l'invention répondant à la définition ci-dessus peut affecter toute forme voulue telle que plaque, tube, etc.

La matière de faible densité et de grande surface spécifique est une silice (dioxyde de silicium) avec, en surface des groupes silanols (SiOH) chimiquement stables, par exemple obtenue par pyro-hydrolyse du tétrachlorure de silicium dans une flamme oxygène-hydrogène. De façon encore plus particulière, ladite matière présente une surface spécifique d'au moins 300 m²/g et une finesse de particules telle que, pour cette surface spécifique, on ait, pour un gramme, environ $10^{17}$ particules. En outre, les groupes silanols (SiOH) de surface sont chimiquement stables jusqu'à des températures de l'ordre de 250°C ;

De façon avantageuse :

- le liant est avantageusement non carbonisable sous l'effet de températures élevées ou sous l'effet d'une flamme. De préférence, ledit liant qui peut, bien entendu être de l'eau sera choisi parmi les résines vulcanisables à une température inférieure à 30°C. On choisira de préférence une résine siliconée vulcanisable ;

- la substance destinée à fournir les molécules d'eau nécessaires peut être choisie parmi les charges connues comme "charges transpirantes". On citera avantageusement le tétraborate disodique décahydraté pur ($Na_2B_4O_7$, 10 $H_2O$) retenant, en masse, 47,3 % d'eau jusqu'à une température de 60°C ; l'hydrate d'alumine ($AlOH_3$) qui retient en masse 33 % d'eau chimiquement lié jusqu'à une température de 215°C.

Cette énumération de substances avantageuses n'est pas limitative. Les deux substances ci-dessus n'ont été citées qu'en raison du fait qu'elles sont du plus grand intérêt, étant donné leur teneur élevée en eau de cristallisation.

De façon tout à fait illustrative de l'invention, un matériau conforme à celle-ci peut répondre à la composition suivante :

Pour une partie en volume de liant, on peut utiliser :

- 1 à 4 parties en volume de tétraborate disodique,
- 0,5 à 2,5 parties en volume de $AlOH_3$,
- 2 à 5 parties en volume de silice telle que définie ci-dessus.

Avec une telle composition, il se trouve que 2 à 5 litres de silice donne 380 000 à 950 000 m² de surface ouverte.

Avec un matériau conforme à l'invention, on assiste, en cas d'agression thermique, au phénomène de surchauffe qui peut s'expliquer de la façon suivante:

- les groupes silanols servant de moyens d'accrochage des molécules d'eau environnantes à des températures supérieures à 100°C, constituent un système de surchauffe de la vapeur d'eau sans aucune augmentation de pression. La condensation des groupes silanols se produit aux environs de 100°C et cette réaction est entièrement réversible jusqu'à environ 250°C, c'est-à-dire que le produit surchauffé retrouve, avec la reprise de l'humidité, sa concentration initiale en SiOH. Ceci explique ainsi l'aptitude à la surchauffe de la vapeur d'eau de ce matériau particulièrement intéressant.

Ce phénomène de surchauffe est d'autant plus important que la surface ouverte de silice à groupes silanols est importante par unité de volume du matériau.

Bien entendu, tout autre produit capable de maintenir physiquement ou chimiquement des vapeurs d'un liquide à une température supérieure à la température de vaporisation de ce liquide entre dans le cadre de la présente invention.

L'exemple suivant de réalisation d'un matériau de protection conforme à l'invention est donné à titre purement explicatif et nullement limitatif :

## Exemple

Matériaux utilisés pour une partie en volume de silicone RTV 121 (Rhône Poulenc) :
- tétraborate disodique décahydraté (Prolabo) ...... 3,6 parties en volume
- hydrate d'alumine (OMIA) .. 2 parties en volume
- "Aérosil 380" ($SiO_2$) (Degussa) de surface spécifique de 380 m²/g .... 3 parties en volume

Matériel utilisé :
Mélangeur ou mélangeur-extrudeur

Le produit malléable résultant du mélange des ingrédients ci-dessus additionné de 0,01 partie de catalyseur RTV 121 B est prêt à être spatulé, moulé sous presse ou à être extrudé en filière. Les produits manufacturés seront utilisables après une stabilisation de 24 heures à température ambiante (environ 20°C). Ils seront appliqués directement sur ou autour de l'organe à protéger et leur maintien en place pourra se faire par tout moyen approprié (collage par exemple). Aucun moyen de conditionnement pour le stockage n'est nécessaire, le matériau fini présentant une stabilité au stockage intéressante pour des températures d'ambiances comprises entre - 100°C et + 60°C. Toutefois on peut aussi obtenir une garantie de stabilité allant jusqu'à 200°C en n'utilisant que l'hydrate d'alumine dans le mélange ci-dessus.

Avec le formule ci-dessus, on a réalisé des plaques moulées à la presse de 10 mm d'épaisseur que l'on a appliquées sur du clinquant métallique de 1 mm d'épaisseur simulant l'élément à protéger.

Les essais de chauffe (simulant une agression thermique) aussi bien aux infra-rouges que par une flamme au propane ont été effectués sur deux éprouvettes placées en symétrie de manière à éviter tout rayonnement des faces froides.

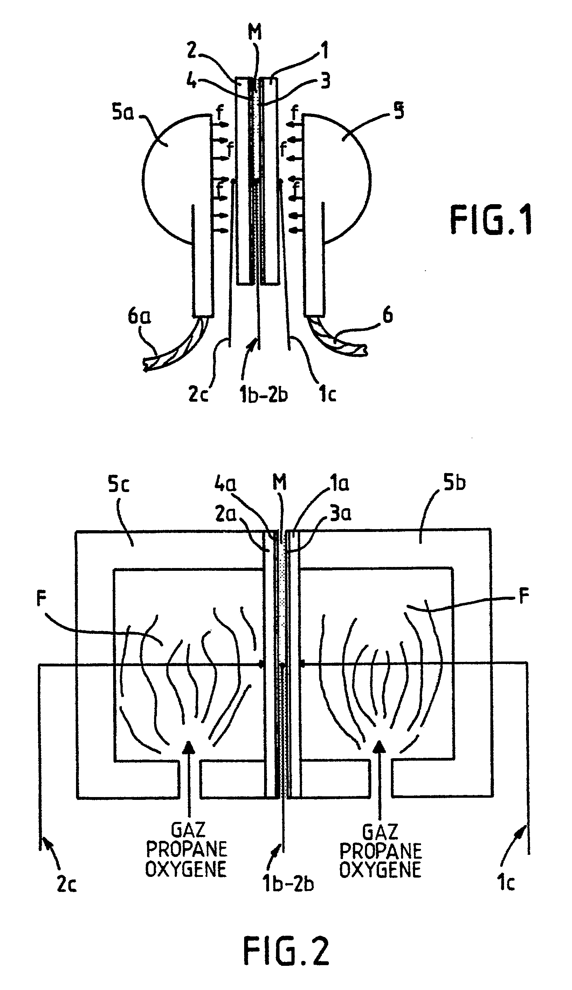

Les figures 1 et 2 annexées illustrent ces deux types d'essais : la figure 1 correspondant à l'agression aux infra-rouges et la figure 2 à l'agression dans un four avec un four à propane.

Les deux éprouvettes 1 et 2 et 1a-2a soumises aux essais sont appliquées respectivement sur leur plaque de clinquant métallique 3-4 et 3a-4a.

Dans le cas de la figure 1, l'agression thermique aux infra-rouges est obtenue par deux appareils 5-5a comportant chacun leur alimentation électrique 6-6a donnant un double flux de 50 kV/m² (illustré par les flèches f).

Pour l'essai, on a disposé des sondes thermiques sur les faces chaudes, respectivement 1c et 2c et sur les faces froides 1b-2b au sein d'un matériau approprié pour leur maintien en position M.

Dans le cas de la figure 2, les mêmes éléments portent des références analogues ; l'agression thermique est obtenue dans deux fours 5b et 5c alimentés en gaz proopane et oxygène, les flammes F schématisant une telle agression thermique.

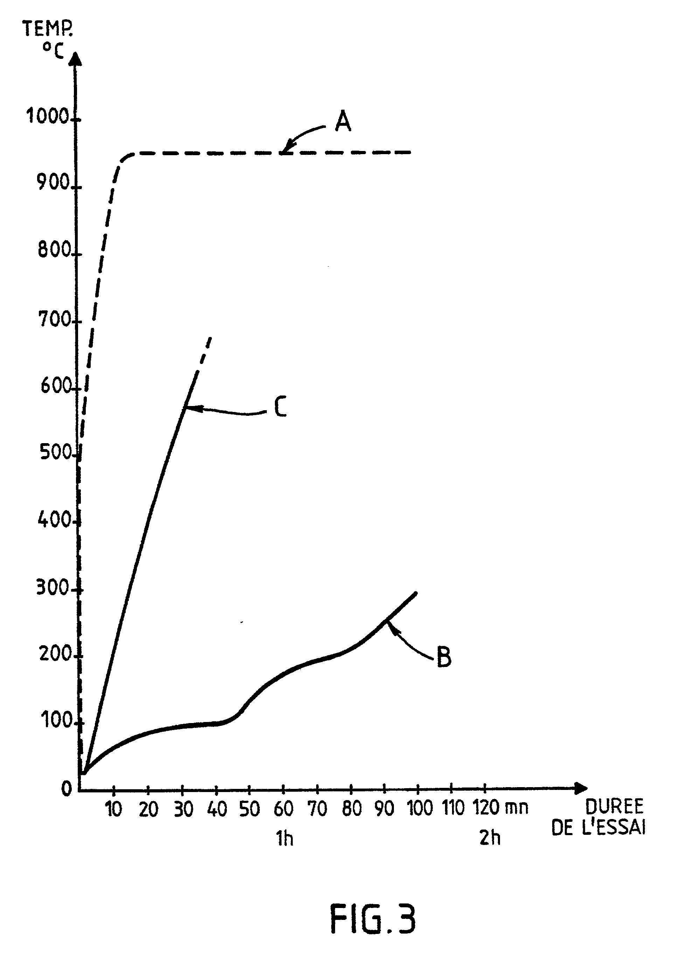

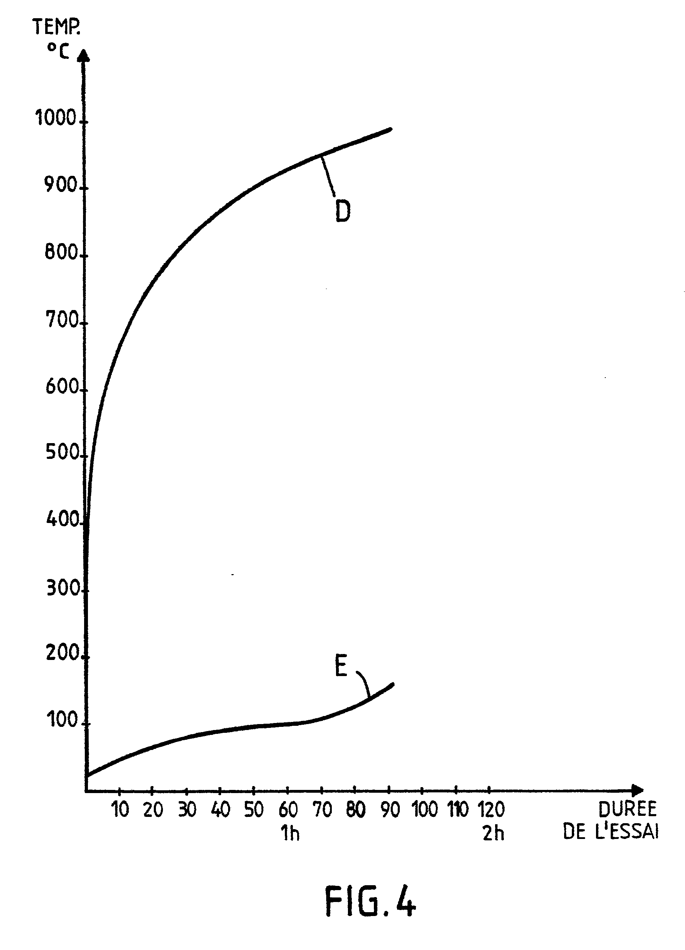

On établit les courbes correspondant aux températures des faces froides. Ces courbes font l'objet des figures 3 et 4. On a porté, pour établir ces courbes, en abscisse, la durée des essais en minutes et en heures et en ordonnée la température en °C.

La figure 3 donne trois courbes, à savoir la courbe A qui est celle correspondant à la température des faces chaudes, la courbe B celle de la température des faces froides en appliquant un élément de protection réalisé avec la formulation donnée ci-dessus et enfin la courbe C qui correspond à la température des faces froides d'échantillons d'un produit du commerce désigné par l'appellation "Kerlane 45" à base de feutre, de fibres céramiques. Un tel produit répond aux caractéristiques suivantes :
- densité : 0,128
- composition : $AlO_3$-$SiO_2$
- chaleur spécifique : 1040 J/Kg/K°
- conductibilité thermique :
. 200°C = 0,06 W/m/K°
. 400°C = 0,09 W/m/K°
. 600°C = 0,12 W/m/K°

Ces trois courbes ont été établies dans le cadre de l'agression aux infra-rouges.

De même, la figure 4 donne pour la courbe D la variation de la température des fours et pour la courbe E, la variation de la température des faces froides dans le cas d'une protection identique à celle utilisée pour l'établissement de la courbe B.

Des deux courbes ont été réalisées à la suite de l'essai au four à propane.

Ces courbes montrent qu'un produit selon l'invention ayant une épaisseur de 10 mm évolue bien de la fonction hydrateur vers la fonction surchauffeur entre 100 et 200°C pendant une durée d'agression thermique supérieure à une heure. Par contre, l'exemple comparatif (courbe C) montre un dépassement de la température de 200°C après 10 minutes d'essai seulement.

Bien entendu, ces exemples n'ont été donnés qu'à titre purement explicatif et nullement limitatif pour montrer le comportement d'un écran de protection réalisé conformément à l'invention au cours d'une agression thermique.

## Revendications

1. Matériau directement applicable pour servir d'écran de protection ou de dissipation thermique, caractérisé en ce qu'il est constitué d'une silice (dioxyde de silicium) de faible densité avec, en surface, des groupes silanols (SiOH) chimiquement stables, et présentant une surface spécifique d'au moins 300 m²/g, possédant en outre la propriété de pouvoir fixer chimiquement des molécules d'eau libre et de permettre la surchauffe des vapeurs de cette eau libre sous l'effet d'une agression thermique jouant ainsi le role d'hydrateur-sur-chauffeur, ladite matière étant mélangée intimement avec au moins un liant non carbonisable et au moins une source desdites molécules d'eau ou une substance fournissant ces dernières.

2. Matériau selon la revendication 1, caractérisé en ce que le liant est avantageusement non carbonisable sous l'effet de températures élevées ou sous l'effet d'une flamme.

3. Matériau selon la revendication 2, caractérisé en ce que ledit liant est choisi de préférence parmi les résines vulcanisables à une température inférieur à 30°C.

4. Matériau selon l'une des revendications 2 ou 3, caractérisé en ce que le liant est une résine siliconée vulcanisable.

5. Matériau selon l'une quelconque des revendications 1 à 4, caractérisé en ce que la substance destinée à fournir les molécules d'eau nécessaires est choisie parmi les substances connues pour leur haute teneur en eau chimiquement liée.

6. Matériau selon la revendication 5, caractérisé en ce que ladite substance est du type tétraborate disodique décahydraté pur ou d'hydrate d'alumine.

7. Matériau selon l'une quelconque des revendications 1 à 6, caractérisé en ce qu'il est obtenu à partir d'une formulation du type: pour une partie en volume de liant :
— 1 à 4 parties en volume de tétraborate disodique ($Na_2B_4O_7.10H_2O$).
— 0,5 à 2,5 parties en volume de $Al(OH)_3$,
— 2 à 5 parties en volume de silice.

## Claims

1. Material suitable for serving as a shield for protection or thermal dissipation, characterised in that it comprises a silica ($SiO_2$) of low density with chemically stable silanol groups on its surface and having a surface area per unit weight of at least 300m²/g, the silanol groups having the property of being able to fix free water molecules and to permit superheating of steam of this free water in response to thermal attack so acting as a superheater hydrater, the said material being intimately mixed with at least one non-combustible binder and at least one source of the said water molecules or a substance supplying the latter.

2. Material according to claim 1, characterised in that the binder is advantageously non-combustible at high temperature or when exposed to flame.

3. Material according to claim 2 characterised in that the binder is preferably selected from resins which can be vulcanised at a temperature less than 30°C.

4. Material according to claim 2 or 3, characterised in that the said binder is a silicon resin that can be vulcanised.

5. Material according to any one of claims 1 to 4 characterised in that the substance for supplying the necessary water molecules is selected from substances having a high concentration of chemically bonded water.

6. Material according to claim 5 characterised in that the said substance is a pure decahydrated disodium tetraborate or an alumina hydrate.

7. Material according to any one of claims 1 to 6 characterised in that it has the following formula:
one part by volume of the binder to one to four parts by volume of disodium tetraborate

($Na_2B_4O_7.10H_2O$) 0.5 to 2.5 parts by volume of Al(OK)3 two to five parts by volume of silica.

## Patentansprüche

1. Material zur direkten Anwendung als Wärmeschutz- oder -Verlustschirm, dadurch gekennzeichnet, daß es aus einer Kieselerde (Siliciumdioxid) geringer Dichte mit oberflächlichen, chemisch-stabilen Silanol-Gruppen (SiOH) besteht, wobei die Kieselerde eine spezifische Oberfläche von mindestens 300m²/g aufweist, ausserdem die Eigenschaft besitzt, freie Wassermoleküle chemisch binden zu können und die Überhitzung der Dämpfe dieses freien Wassers unter Einwirkung eines thermischen Angriffs zuzulassen, also die Rolle eines Hydrators-Überhitzers spielt, wobei diese Substanz innig mit mindestens einem nicht-carbonisierbaren Bindemittel und mindestens einer Quelle für die Wassermoleküle oder einer diese liefernden Substanz vermengt ist.

2. Material nach Anspruch 1, dadurch gekennzeichnet, daß das Bindemittel vorteilhafterweise unter Einwirkung erhöhter Temperaturen oder unter Einwirkung einer Flamme nicht-carbonisierbar ist.

3. Material nach Anspruch 2, dadurch gekennzeichnet, daß das Bindemittel vorzugsweise aus Harzen ausgewählt ist, die bei einer Temperatur niedriger als 30°C vulkanisierbar sind.

4. Material nach einem der Ansprüche 2 oder 3, dadurch gekennzeichnet, daß das Bindemittel ein vulkanisierbares Silicon-Harz ist.

5. Material nach einem der Ansprüche 1 bis 4, dadurch gekennzeichnet, daß die zur Lieferung der erforderlichen Wassermoleküle bestimmte Substanz aus den für einen hohen Gehalt an chemisch gebundenem Wasser bekannten Substanzen gewählt ist.

6. Material nach Anspruch 5, dadurch gekennzeichnet, daß die Substanz von der Art eines reinen Dinatrium-tetraborat-dekahydrats oder eines Aluminiumhydrats ist.

7. Material nach einem der Ansprüche 1 bis 6, dadurch gekennzeichnet, daß es aus einer Rezeptur nachfolgenden Typs erhalten wird: pro Volumenanteil Bindemittel werden
   – 1 bis 4 Volumenanteile Dinatrium-tetraborat ($Na_2B_4O_7.10H_2O$),
   – 0,5 bis 2,5 Volumenanteile Al(OH)3
   – 2 bis 5 Volumenanteile Kieselerde zugesetzt.

EP 0 230 831 B1

FIG.1

GAZ
PROPANE
OXYGENE

GAZ
PROPANE
OXYGENE

FIG.2

FIG.3

FIG.4